# EUROPEAN PATENT APPLICATION

(11) **EP 4 279 173 A1**
(43) Date of publication of application: **22.11.2023**
(21) Application number: 22174517.7
(22) Date of filing: 20.05.2022
(51) Int. Cl.: B01J 8/24, B01J 19/24, C08F 10/06

(54) **SPLIT LOOP PROPYLENE POLYMERIZATION PLANT AND SPLIT LOOP PROPYLENE POLYMERIZATION PROCESS**

(71) Applicant: Borealis AG, 1020 Vienna (AT)
(72) Inventor: KRALLIS, Apostolos, 06850 Kulloo (FI); KANELLOPOULOS, Vasileios, 4021 Linz (AT)
(74) Representative: Maiwald GmbH

(57) **Abstract**

Loop-Loop-gas-phase reactor polypropylene plant and process for producing polypropylene and polypropylene copolymers.

## Description

### Field of the Invention

The present invention concerns a polymerization plant suitable for extra largescale propylene polymerization. The present invention further concerns a process for polymerization of propylene using such a plant.

### Background

Coupling of loop and gas phase reactor is known for more than two decades under the trademark Borstar^{®} and has found its way into practically any textbook in the field of polyolefins. The basic process layout is described, for example, in WO9858975A1 dealing with the preparation of propylene homopolymers and copolymers, which comprises polymerizing propylene optionally with comonomers in the presence of a catalyst at elevated temperature and pressure in at least one slurry reactor and at least one gas phase reactor, the polymerization product of at least one slurry reactor, containing unreacted monomers, being directly conducted to a first gas phase reactor essentially without recycling of the unreacted monomers to the slurry reactor.

Unfortunately, medium-size polypropylene production plants have significant higher operational costs and fixed costs per ton of produced product when compared to extra-large size polypropylene plants. However, by increasing the scale of the production, quality issues and operational issues do rise. Increasing capacity of loop reactors can be done by adding further legs to the reactor. In industry, loop reactors have been scaled up from two legs to six legs, and even 8 legs loop reactors are not uncommon. Unfortunately, such modifications result in drawbacks; e.g., significant reactants' concentration gradients can occur. For example, in polypropylene homo-polymerization the hydrogen to propylene ratio can vary over the length of the loop reactor. In addition to that, in propylene copolymerization the ratio of comonomer to propylene can cause a significant gradient in the loop reactor. It goes without saying, when the comonomer/C3 ratio drops over the length of the loop reactor, properties such as the randomness will be affected. Moreover, the olefin comonomer (i.e. ethylene) distribution is not evenly distributed among both inter- and intra-macromolecules, thus, providing higher organoleptic content. Organoleptic considerations refer to the phenomena of organic compounds that might migrate into food from the polymer wrapping, thereby, altering the taste or/and the odour of the food. This is particularly a problem when single site catalysts are used; single site catalysts are much more sensitive in terms of their hydrogen response and comonomer incorporation. Thus, there still remains the need for a process and a plant allowing upscaling to extra-large scale avoiding at least in part these and related problems.

### Summary of the Invention

The present invention provides a plant for preparing propylene homopolymers or propylene copolymers, comprising
(i) feed tank(s) for single site catalyst (1), and optional co-catalyst (2), optional activator and optional external donor (3);
(ii) optional pre-contacting unit (4) for catalyst mixing being connected by feed lines (5, 5', 5") with the feed tank(s);
(iii) a prepolymerization reactor (6) connected with the feed tank(s) (1, 2, 3) or the pre-contacting unit (4) and with the propylene feed tank (7);
(iv) a propylene feed tank (7) ;
(v) a first loop reactor (8) connected with the prepolymerization reactor;
(vi) a second loop reactor (9) connected with the first loop reactor via a loop reactors connecting line (10);
   wherein said first loop reactor has a volume of up to 40 vol.-% with respect to the combined volume of the first and the second loop reactors and wherein said second loop reactor has a volume of at least 60 vol.-% with respect to the combined volume of the first and the second loop reactors; and wherein the combined volume of said first and said second loop reactors is in the range of 50 to 150 m³; and whereby the propylene feed tank is connected with the first and the second loop reactor;
(vii) a single feed point for feeding propylene monomer, optional comonomer (11) and hydrogen (12) to said first loop reactor (8), and a single feed point for feeding propylene monomer, optional comonomer (11) and hydrogen (12) to said second loop reactor (9);
(viii) a gas-phase reactor (13) equipped with a gas circulation line (14), a circulation gas compressor (15) and a circulation gas cooler (16), the gas-phase reactor being coupled to said second loop reactor by a direct feed line (17);
(ix) means for feeding propylene monomer (44) and/or comonomer (18) and/or hydrogen (19) to the gas-phase reactor (13); whereby preferably the means for feeding monomer and/or comonomer are suitable for feeding monomer and/or comonomer in condensed form;
(x) optionally a product discharge vessel (20) connected with the gas-phase reactor;
(xi) optionally a product outlet heater (21)
(xii) a product receiver tank (22) connected with the optional product discharge vessel (20) or with the gas-phase reactor (13);
(xiii) means for propylene homopolymer or propylene copolymer recovery (25)
   optionally including means for homogenization, additivation, and pelletization.

The present invention further provides a process for preparing propylene homopolymers and copolymers, comprising
a) providing a single site catalyst, optional co-catalyst, optional activator in feed tanks (1, 2, 3);
b) feeding said single site catalyst, said optional co-catalyst, said optional activator to a pre-contacting unit (4) for providing a mixed catalyst system; feeding said mixed catalyst system to the prepolymerization reactor or feeding said single site catalyst, said optional co-catalyst, said optional activator to prepolymerization reactor (6);
c) initiating prepolymerization by introducing propylene monomer and optionally introducing comonomer thereby providing a prepolymer;
d) feeding said prepolymer to a first loop reactor (8) and polymerizing propylene with optional comonomer yielding a first intermediate;
e) feeding the first intermediate to a second loop reactor (9) via a loop reactors connection line (10) and further polymerizing propylene optionally with comonomer yielding a second intermediate,
f) wherein said first loop reactor has a volume of up to 40 vol.-% with respect to the combined volume of the first and the second loop reactor and wherein said second loop reactor has a volume of at least 60 vol.-% with respect to the combined volume of the first and the second loop reactor; and wherein the combined volume of said first and said second loop reactor is in the range of 50 to 150 m³; and wherein there is a single feed point for feeding monomer, comonomer (11) and hydrogen (12) to the first loop reactor (8), and a single feed point for feeding monomer, comonomer (11) and hydrogen (12) to the second loop reactor (9);feeding said second intermediate containing unreacted monomer(s) directly to gas phase reactor (13) via direct feed line (17);
g) further polymerizing propylene and optional comonomer in said gas phase reactor (13) by feeding propylene and/or comonomer and/or hydrogen and by effecting a gas circulation via a gas circulation line (14) in upwards direction,
h) optionally discharging the gas-phase reactor product into an optional product discharge vessel (20) and subsequently into a product-receiver tank (22) via connecting line (34) for providing a raw mixture or discharging the gas-phase reactor product directly into a product receiver tank (22) for providing a raw mixture.

In a further aspect, the present invention concerns the use of a plant as described for preparing propylene homopolymer or preferably propylene copolymers.

In yet a further aspect, the present invention concerns the use of a plant as described for reducing comonomer / propylene molar ratio drift and/or hydrogen / propylene molar ratio drift over the length of at least one of said loop reactors.

The plant according to the present invention, in contrast to conventional plants of this kind, includes two loop reactors with a combined volume of 50 to 150 m³, whereby the first loop reactor has a volume of up to 40 vol.-% with respect to said combined volume of the first and second loop reactor. The present invention further applies a catalyst selected from the group of single site catalysts which are a class known for their sensitivity as to gradients in terms of monomer, comonomer and/or hydrogen.

It surprisingly turned out that segregation phenomena in the gas phase reactor could be controlled more easily, solids flowability could be improved and agglomeration formation was lowered.

The plant according to the present invention preferably comprises one or more of the following:
(xiv) at least one purge bin (23) preferably connected with the product receiver tank (22) via a purge bin feed line (48);
(xv) at least one propylene nitrogen recovery unit (24) preferably connected with the at least one purge bin (23) via a feed line (51);
(xvi) a column supply line (241) for feeding a hydrocarbon stream to a column (28);
(xvii) a nitrogen re-feed line (243) for re-feeding a nitrogen rich stream to the purge bin (23);
(xviii) optionally a thermal oxidizer unit (43);
(xix) an exhaust line (242) for discharge of an exhaust stream, optionally derived from the at least one propylene nitrogen recovery unit (24), optionally to the optional thermal oxidizer (43)
(xx) a recovery gas treating unit (26) comprising at least one compressor (27), said column (28) and a reflux feed vessel (28a), the reflux feed vessel (28a) being connected via a recovery line (29) with the gas circulation line (14) of the gas-phase reactor (13);
(xxi) a cooling circuit (30) for the circulation gas cooler (16);
(xxii) a blow down unit (31) comprising a high pressure blow down bin (32), a low pressure blow down bin (33), the blow down unit (31) being preferably connected via connecting line (34) with the product receiver tank (22); and
(xxiii) a recovery feed line (35) connecting recovery gas treating unit (26) with the propylene feed tank (7).

The plant according to the present invention preferably further comprises one or more of the following:
(xxiv) knock out drum (38)
(xxv) gas phase reactor area depressurization cyclone (39)
(xxvi) gas phase reactor flare knock out drum (40).

Such units increase the safety of the inventive plant.

Preferably, in the plant according to the present invention, the loop reactors connecting line (10) includes a concentrator, more preferably a hydrocyclone. Such concentrators, particularly hydrocyclones, and their configuration have been described in WO2017/097577 which document is incorporated by reference herewith. Particularly all configurations as disclosed in WO2017/097577, which are compatible with a single feed at each of the two loop reactors, are incorporated by reference herewith.

The process as described preferably also includes a concentrator, more preferably a hydrocyclone.

All aspects as described herein with respect to the plant shall also hold and be disclosed for the process.

### Detailed Description

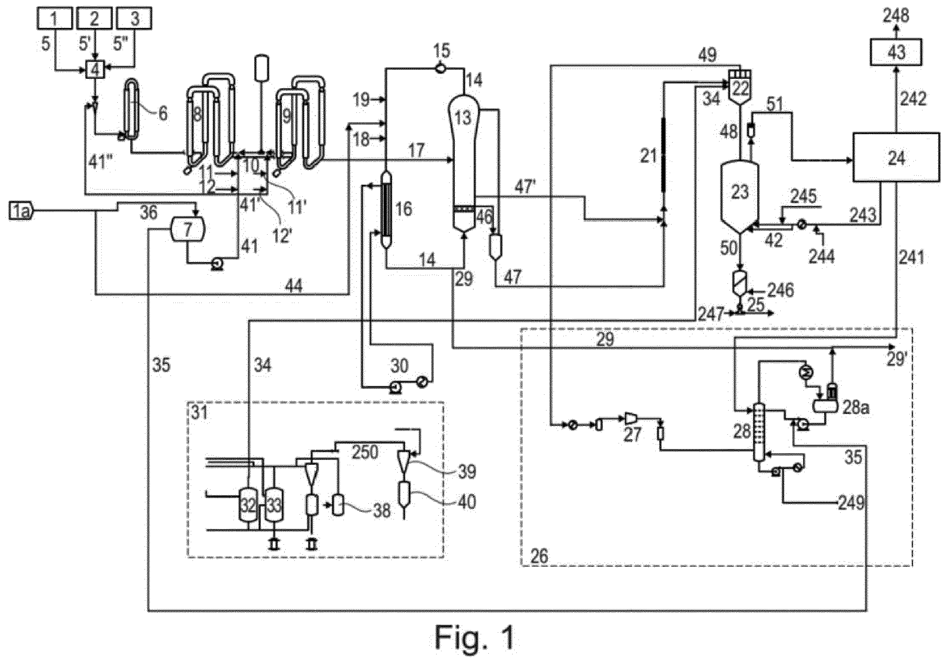

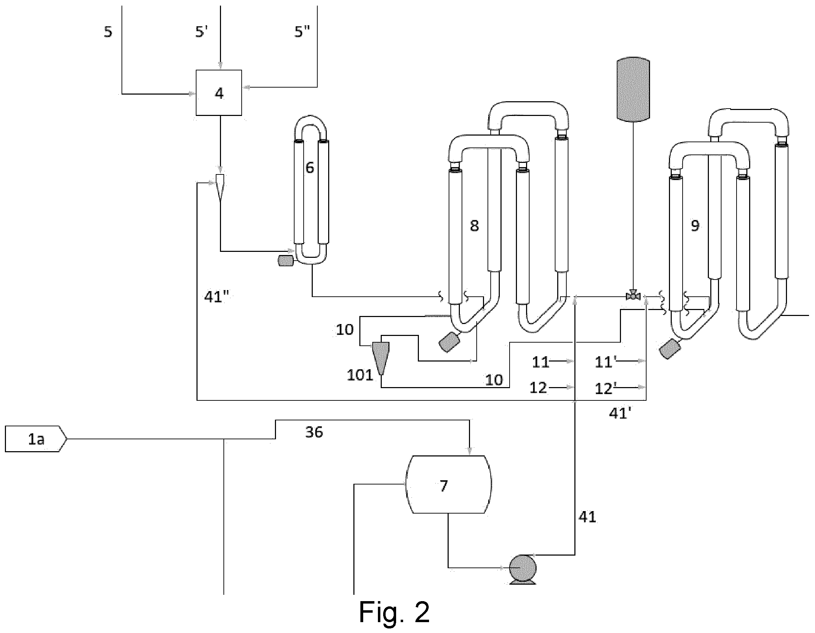

In the following, the invention shall be described with respect to the figures. Reference numbering for Fig. 1 and Fig. 2
- 1: feed tank for catalyst
- 2: optional feed tank for co-catalyst
- 3: optional feed tank(s) for activator and/or optional external donor
- 4: optional pre-contacting unit for catalyst mixing
- 5, 5', 5": feed lines connecting feed tank connecting feed tanks and catalyst feed vessel or prepolymerization reactor
- 6: prepolymerization reactor
- 7: propylene feed tank
- 8: first loop reactor
- 9: second loop reactor
- 10: loop reactors connecting line
- 101: hydrocyclone (only shown in Fig. 2)
- 11: means for feeding monomer and optional comonomer
- 12: means for feeding hydrogen
- 13: gas-phase reactor
- 14: gas circulation line
- 15: circulation gas compressor
- 16: circulation gas cooler
- 17: direct feed line
- 18: means for feeding comonomer
- 19: means for feeding hydrogen
- 20: optional product discharge vessel
- 21: product outlet heater
- 22: product receiver tank
- 23: purge bin
- 24: propylene nitrogen recovery unit
- 25: outlet line (for polymer powder) with means for propylene homopolymer or propylene copolymer recovery (optionally including means for homogenization, additivation and pelletization;
- 26: recovery gas treating unit
- 27: gas recovery compressor
- 28: column
- 28a: reflux recovery feed vessel
- 29, 29': recovery feed lines
- 30: cooling circuit for circulation gas cooler
- 31: blow down unit
- 32: high pressure blow down bin
- 33: low pressure blow down bin
- 34: connecting line
- 35: recovery feed line
- 36: further feed line optionally containing dryer(s)
- 38: knock out drum
- 39: gas phase reactor area depressurization cyclone
- 40: gas phase reactor flare knock out drum
- 41, 41', 41": propylene feed line
- 42: means for catalyst deactivation (e.g. means for introducing low pressure steam)
- 43: thermal oxidizer unit
- 44: means for feeding liquid propylene monomer
- 48: purge bin feed line
- 49: line connecting product receiver tank (22) and gas recovery compressor (27)
- 51: feed line from purge bin (23) to propylene nitrogen recovery unit (24)
- 241: column supply line
- 242: exhaust line
- 243: nitrogen re-feed line
- 244: external nitrogen feed line
- 245: feed line for catalyst deactivating agent (usually low pressure steam)
- 246: further nitrogen feed line
- 247: line for conveying nitrogen
- 249: outlet line for oligomers

Fig. 1 shows the inventive plant which is used for carrying out the inventive process.

Fig. 2 shows the preferred connectivity of the loop reactors.

The plant according to the present invention shall be further described with respect to Fig. 1 and Fig. 2.

The plant according to the present invention for preparing propylene homopolymers and copolymers comprises feed tank(s) for single site catalyst (1), optional co-catalyst (2), and optional activator. Optionally there is a pre-contacting unit (4) for single site catalyst mixing being connected by feed lines (5, 5', 5") with the feed tank(s). In various embodiments and for various single site catalyst systems, a pre-contacting tank is not necessary.

The plant according to the present invention also includes a prepolymerization reactor (6) connected with the feed tank(s) (1, 2, 3) or the pre-contacting unit (4). Such prepolymerization is known in the art. The plant also includes a propylene feed tank (7), a first loop reactor (8) connected with the prepolymerization reactor, and a second loop reactor (9) connected with the first loop reactor via a loop reactors connecting line (10) as well as means for feeding comonomer (11) and hydrogen (12) to one or more of first loop reactor (8), second loop reactor (9), and/or loop reactors connecting line (10) between the loop reactors.

As explained above in the summary of the invention, the first and second loop reactor have a combined volume of 50 to 150 m³. Plants having such huge loop reactors are usually denoted "mega plants". Moreover, as also explained above the first loop reactor has a volume of up to 40 vol.-% with respect to the combined volume of the first and the second loop reactor and the second loop reactor has a volume of at least 60 vol.-% with respect to the combined volume of the first and the second loop reactor. These features guarantee preferential particle size distributions.

Apart from the loop reactors the plant according to the present invention also comprises a gas-phase reactor (13) equipped with a gas circulation line (14), a circulation gas compressor (15) and a circulation gas cooler (16), the gas-phase reactor being coupled to the at least second loop reactor by a direct feed line (17). Means for feeding monomer (44) and/or optional comonomer (18) and/or hydrogen (19) to the gas-phase reactor (13). In addition to the plant optionally includes a product discharge vessel (20) connected with the gas-phase reactor. Such product discharge vessel contributes to the operational stability. Optionally a product outlet heater (21) is present. Usually a product outlet heater will have several units. The plant according to the present invention preferably also includes a product receiver tank (22) connected with the optional product discharge vessel (20) or with the gas-phase reactor (13), at least one purge bin (23).

In addition to that, the plant also includes at least one propylene nitrogen recovery unit (24) with a column supply line (241) for feeding a hydrocarbon stream to a column (28), a nitrogen re-feed line (243) for re-feeding a nitrogen rich stream to the purge bin (23), optionally a thermal oxidizer unit (43) and an exhaust line (242) for discharge of an exhaust stream optionally to the optional thermal oxidizer (43). Optionally there can be further feed lines such as a nitrogen re-feed line (243), an external nitrogen feed line (245), a feed line for catalyst deactivating agents, i.e. usually low pressure steam. Preferably, there is also an outlet for oligomers (249).

The plant according to the present invention also includes means for propylene homopolymer or propylene copolymer recovery (25) said means (25) optionally including means for homogenization, additivation, and pelletization, a recovery gas treating unit (26) comprising at least one compressor (27), said column (28) and a reflux feed vessel (28a), the reflux feed vessel (28a) being connected via a recovery line (29) with the gas circulation line (14) of the gas-phase reactor (13).

In addition to that, there is a cooling circuit (30) for the circulation gas cooler (16). Such circulation gas cooler contributes to the broad operational window.

Apart therefrom there is also a blow down unit (31) comprising a high pressure blow down bin (32), a low pressure blow down bin (33), the blow down unit (31) being optionally connected via connecting line (34) with the product receiver tank (22).

The plant according to the present invention further includes a recovery feed line (35) connecting recovery gas treating unit (26) with the propylene feed tank (7). This important recovery feed line (35) allows refeed of propylene also to the loop reactors, i.e. results in an integrated recovery system.

### Experimental Part

The plant and the process according to the invention have been exemplified in the following examples. These examples are included for illustrative purposes and do not limit the invention.

### Reference Example 1 (RE1)

A conventional Ziegler Natta catalyst was first introduced to prepolymerization reactor under T = 30 °C, P = 57 barg) together with propylene. Upon polymerization for 30 min a propylene homopolymer was produced. The product was transferred to a single loop reactor having length equal to 250 m and diameter equal to 0.57 m with a single feed point for propylene monomer, comonomer and hydrogen. 30 t/h propylene, 0.45 t/h ethylene and 10 kg/h H₂ were injected in the loop reactor via a single feed point, polymerization took place at T = 70 °C, P = 55 barg and the mean residence time was equal to 1.5 h. Propylene-ethylene copolymer was produced having crystallinity equal to 50 %, average particle size of 950 µm and the solids concentration in the reactor was 35% wt. Table 1 illustrates the C2/C3 and H2/C3 ratios in the liquid phase at various reactor lengths.

**Table 1. C2/C3 and H2/C3 molar ratios at various locations in the loop reactor (Single loop reactor configuration; single feed point).**

| **Composition (mol/Kmol)** | **L = 0 m** | **L = 75** m | **L** = **150 m** | **L = 250 m** |
|---|---|---|---|---|
| C2/C3 (Liquid) | 20 | 18.6 | 14.4 | 11.8 |
| H2/C3 (Liquid) | 4 | 3.88 | 3.38 | 3.14 |

As it can be seen, there is 40 % C2/C3 molar ratio drift and 21.5 % H2/C3 molar ratio drift along the reactor tube.

### Reference Example 2 (RE2)

The procedure of the Comparative Example 1 was repeated with the exception that two loop reactors were employed. The first loop reactor has a length equal to 87 m and diameter equal to 0.57 m, while the second one has a length of 163 m and diameter equal to 0.57 m. 10 t/h propylene, 0.15 t/h ethylene and 3.5 Kg/h H₂ were injected (again via a single feed point) in the first loop reactor and 20 t/h propylene, 0.30 t/h ethylene and 6.5 Kg/h H₂ were injected (again via a single feed point) in the second loop reactor of the series. The polymerization conditions in the first loop were T = 70 °C, P = 55 barg and the mean residence time was equal to 45 min. The polymerization conditions in the second loop were T = 70 °C, P = 53 barg and the mean residence time was equal to 45 min. Table 2 illustrates the C2/C3 and H2/C3 ratios in the liquid phase at various reactor lengths in the two loop reactors.

**Table 2. C2/C3 and H2/C3 molar ratios at various locations in the loop reactor (split loop reactor configuration).**

| **Composition (mol/Kmol) (1^{st} loop)** | **L = 0 m** | **L = 43 m** | **L = 87 m** |
|---|---|---|---|
| C2/C3 (Liquid) | 20 | 19.4 | 18.1 |
| H2/C3 (Liquid) | 4 | 3.90 | 3.79 |

| **Composition (mol/Kmol) (2^{nd} loop)** | **L = 0 m** | **L = 82 m** | **L = 163 m** |
|---|---|---|---|
| C2/C3 (Liquid) | 20 | 18.1 | 15.9 |
| H2/C3 (Liquid) | 4 | 3.83 | 3.55 |

As it can be seen, there is 9.5 % C2/C3 molar ratio drift and 5.25 % H2/C3 molar ratio drift along the reactor tube in the first loop reactor and 20.5 % C2/C3 molar ratio drift and 11.2 % H2/C3 molar ratio total drift from the entrance of the first loop reactor to the exit of the second loop reactor.

Reference Example 1 shows the benefit of two loop reactors.

### Comparative Example 1 (CE1)

The procedure of Reference Example 1 was repeated with the exception that a commercially available single site catalyst was used and with the exception that the loop reactor was coupled to a gas phase reactor (GPR). More particularly, the polymer particles characterized by d10 = 150 µm, d50 = 820 µm and d90 =1750 µm (span = 1.95, span = (d90-d10)/d50)) were transferred to the GPR where they were polymerized for 2.5 hours using operating conditions of T = 85 °C and P = 21 barg and selected superficial gas velocity (SGV) equal to 0.55 m/s. In this reactor (GPR) the rubber fraction was produced and it was equal to 35%wt by adding ethylene as comonomer at a molar ratio equal to C2/C3 = 500 mol/kmol. During the test operation, segregation phenomena in the gas phase reactor were monitored. More specifically, based on pressure difference measurements across the gas-solid fluidized bed reactor the corresponding local fluidized bulk density values were measured. Thus, the fluidized bulk density was varying between 280 kg/m³ (close to the bottom of the GPR) to 230 kg/m³ (in the middle zone of the GPR) and 195 kg/m³ (in the top zone of the GPR). Moreover, presence of agglomerates was detected and the quality of the fluidization was poor (i.e., temperature was deviating up to 5.0 °C and the GPR operating pressure was fluctuating up to 25 % of the set point value). The bulk density of the PP powder was 340 kg/m³, reflecting significant morphological issues (poor external morphology of the polymer particles imposed by the agglomeration phenomena combined with the segregation issues across the fluidized bed height. The operation of the GPR was interrupted after 7 days due to operability issues related to segregation and agglomeration phenomena.

### Comparative Example 2 (CE2)

The procedure of Reference Example 2 (RE2) was repeated with the exception that a commercially available single site catalyst was used and with the exception that the loop reactors were coupled to a gas phase reactor (GPR). Loop reactor 1 had a volume of around 35 vol.-% with respect to the combined volume, whereas loop reactor 2 had a volume of around 65 vol.-%.

More particularly, the polymer particles characterized by d10 = 380 µm, d50 = 960 µm and d90 =1600 µm (span = 1.27) were transferred to the GPR where they were polymerized for 2.5 hours using operating conditions of T = 85 °C and P = 21 barg and selected superficial gas velocity (SGV) equal to 0.55 m/s. In this reactor (GPR) the rubber fraction was produced and it was equal to 35%wt by adding ethylene as comonomer at a molar ratio equal to C2/C3 = 500 mol/kmol. During the test operation, the segregation phenomena in the gas phase reactor were monitored. More specifically, based on pressure difference measurements across the gas-solid fluidized bed reactor the corresponding local fluidized bulk density values was measured. Thus, the fluidized bulk density was varying between 284 kg/m³ (close to the bottom of the GPR) to 278 kg/m³ (in the middle zone of the GPR) and 274 kg/m³ (in the top zone of the GPR). Moreover, no agglomerates were detected and the quality of the fluidization was very high (i.e., temperature was deviating up to 1.0 °C and the GPR operating pressure was fluctuating up to 8 % of the set point value. The bulk density of the PP powder was 460 kg/m³, reflecting very good morphology of the produced polymer particles. The operation of the GPR continued without operability issues for 15 days.

Based on the Comparative examples 1 and 2 it can be concluded that the use of the split loop reactor configuration in the bulk stage of the process resulted in i) producing polymer particles in the bulk polymerization stage with narrower particle size distribution (lower span value) and ii) significantly lessening the segregation and agglomeration phenomena in the subsequent gas phase polymerization reactor. The employment of the split loop reactor configuration in the bulk stage of the multi-stage process contributes in smoothening the concentration drift of reactants across the length of the bulk loop reactors, thus, producing polymer particles with enhanced intra-homogeneity (i.e., the comonomer is more evenly distributed within the polymer particles). This in turn leads to polymer particles with well-distributed molecular properties (i.e., molecular weight, crystallinity, XS, amorphous fraction, etc.). All the above contribute to the production of polymer particles, which exhibit uniform local growth rates as well as even molecular properties at the particle level so that narrow particle size distribution and less tendency for stickiness in the subsequent polymerization stage are achieved.

Results are shown in the table below:

| | RE1 | RE2 | CE1 | CE2 |
|---|---|---|---|---|
| catalyst | conventional ZN | conventional ZN | commercially available single site catalyst | commercially available single site catalyst |
| Prepolym. | | | | |
| T (°C) | 30 | 30 | 30 | 30 |
| P (barq) | 57 | 57 | 57 | 57 |
| Time (min) | 30 | 30 | 30 | 30 |
| production | homo | homo | homo | homo |
| Loop 1 | (single loop) | (dual loop) | (single loop) | (dual loop) |
| Feed point(s) | single | single | single | single |
| Lenqth (m) | 250 | 87 | 250 | 87 |
| Diameter (m) | 0.57 | 0.57 | 0.57 | 0.57 |
| T(°C) | 70 | 70 | 70 | 70 |
| P (barg) | 55 | 55 | 55 | 55 |
| Mean residence time | 1.5h | 45 min | 1.5 h | 45 min |
| Loop2 | | | | |
| Feed point(s) | | single | | single |
| Length (m) | | 163 | | 163 |
| Diameter (m) | | 0.57 | | 0.57 |
| T(°C) | | 70 | | 70 |
| P (barg) | | 53 | | 53 |
| Mean residence time | | 45 min | | 45 min |
| C2/C3 molar ratio drift (%) | 40 | 9.5 | | |
| H2/C3 molar ratio drift (%) | 21.5 | 5.25 | | |
| Gas phase reactor | | | | |
| T (°C) | | | 85 | 85 |
| P (barg) | | | 21 | 21 |
| Superficial gas velocity (m/s) | | | 0.55 | 0.55 |
| C2/C3 (mol/kmol) | | | 500 | |
| time | | | | 2.5h |
| observation | significant C2/C3 molar ratio drift and H2/C3 molar ratio drift along reactor tube | low C2/C3 molar ratio drift and H2/C3 molar ratio drift along reactor tube | segregation phenomena; agglomerates detected | no agglomerates detected; good fluidization stability |
| operated | | | max. 7 days shutdown | 15 days without |
| | | | | problems; stopped voluntarily |

## Claims

1. Plant for preparing propylene homopolymers or propylene copolymers, comprising
(i) feed tank(s) for single site catalyst (1), and optional co-catalyst (2), optional activator and optional external donor (3);
(ii) optional pre-contacting unit (4) for catalyst mixing being connected by feed lines (5, 5', 5") with the feed tank(s);
(iii) a prepolymerization reactor (6) connected with the feed tank(s) (1, 2, 3) or the pre-contacting unit (4) and with the propylene feed tank (7);
(iv) a propylene feed tank (7) ;
(v) a first loop reactor (8) connected with the prepolymerization reactor;
(vi) a second loop reactor (9) connected with the first loop reactor via a loop reactors connecting line (10);
wherein said first loop reactor has a volume of up to 40 vol.-% with respect to the combined volume of the first and the second loop reactors and wherein said second loop reactor has a volume of at least 60 vol.-% with respect to the combined volume of the first and the second loop reactors; and wherein the combined volume of said first and said second loop reactors is in the range of 50 to 150 m³; and whereby the propylene feed tank is connected with the first and the second loop reactor;
(vii) a single feed point for feeding propylene monomer, optional comonomer (11) and hydrogen (12) to said first loop reactor (8), and a single feed point for feeding propylene monomer, optional comonomer (11) and hydrogen (12) to said second loop reactor (9);
(viii) a gas-phase reactor (13) equipped with a gas circulation line (14), a circulation gas compressor (15) and a circulation gas cooler (16), the gas-phase reactor being coupled to said second loop reactor by a direct feed line (17);
(ix) means for feeding propylene monomer (44) and/or comonomer (18) and/or hydrogen (19) to the gas-phase reactor (13); whereby preferably the means for feeding monomer and/or comonomer are suitable for feeding monomer and/or comonomer in condensed form;
(x) optionally a product discharge vessel (20) connected with the gas-phase reactor;
(xi) optionally a product outlet heater (21)
(xii) a product receiver tank (22) connected with the optional product discharge vessel (20) or with the gas-phase reactor (13);
(xiii) means for propylene homopolymer or propylene copolymer recovery (25)
optionally including means for homogenization, additivation, and pelletization.

2. The plant of claim 1 further comprising
(xiv) at least one purge bin (23) preferably connected with the product receiver tank (22) via a purge bin feed line (48);
(xv) at least one propylene nitrogen recovery unit (24) preferably connected with the at least one purge bin (23) via a feed line (51);
(xvi) a column supply line (241) for feeding a hydrocarbon stream to a column (28);
(xvii) a nitrogen re-feed line (243) for re-feeding a nitrogen rich stream to the purge bin (23);
(xviii) optionally a thermal oxidizer unit (43);
(xix) an exhaust line (242) for discharge of an exhaust stream, optionally derived from the at least one propylene nitrogen recovery unit (24), optionally to the optional thermal oxidizer (43)
(xx) a recovery gas treating unit (26) comprising at least one compressor (27), said column (28) and a reflux feed vessel (28a), the reflux feed vessel (28a) being connected via a recovery line (29) with the gas circulation line (14) of the gas-phase reactor (13);
(xxi) a cooling circuit (30) for the circulation gas cooler (16);
(xxii) a blow down unit (31) comprising a high pressure blow down bin (32), a low pressure blow down bin (33), the blow down unit (31) being preferably connected via connecting line (34) with the product receiver tank (22); and
(xxiii) a recovery feed line (35) connecting recovery gas treating unit (26) with the propylene feed tank (7).

3. The plant of claim 1 or 2 further comprising one or more of the following:
(xxiv) knock out drum (38);
(xxv) gas phase reactor area depressurization cyclone (39);
(xxvi) gas phase reactor flare know out drum (40).

4. The plant according to any one of the preceding claims, wherein said loop reactors connecting line (10) includes a concentrator (101).

5. The plant according to claim 4, wherein said concentrator (101) is a hydrocyclone.

6. A process for preparing propylene homopolymers or propylene copolymers. comprising
a) providing a single site catalyst, optional co-catalyst, optional activator in feed tanks (1, 2, 3);
b) feeding said single site catalyst, said optional co-catalyst, said optional activator to a pre-contacting unit (4) for providing a mixed catalyst system; feeding said mixed catalyst system to the prepolymerization reactor
or
feeding said single site catalyst, said optional co-catalyst, said optional activator to prepolymerization reactor (6);
c) initiating prepolymerization by introducing propylene monomer and optionally introducing comonomer thereby providing a prepolymer;
d) feeding said prepolymer to a first loop reactor (8) and polymerizing propylene with optional comonomer yielding a first intermediate;
e) feeding the first intermediate to a second loop reactor (9) via a loop reactors connection line (10) and further polymerizing propylene optionally with comonomer yielding a second intermediate,
f) wherein said first loop reactor has a volume of up to 40 vol.-% with respect to the combined volume of the first and the second loop reactor and wherein said second loop reactor has a volume of at least 60 vol.-% with respect to the combined volume of the first and the second loop reactor; and wherein the combined volume of said first and said second loop reactor is in the range of 50 to 150 m³; and wherein there is a single feed point for feeding monomer, optional comonomer (11) and hydrogen (12) to the first loop reactor (8), and a single feed point for feeding monomer, optional comonomer (11) and hydrogen (12) to the second loop reactor (9); feeding said second intermediate containing unreacted monomer(s) directly to gas phase reactor (13) via direct feed line (17);
g) further polymerizing propylene and optional comonomer in said gas phase reactor (13) by feeding propylene and/or comonomer and/or hydrogen and by effecting a gas circulation via a gas circulation line (14) in upwards direction,
h) optionally discharging the gas-phase reactor product into an optional product discharge vessel (20) and subsequently into a product-receiver tank (22) via connecting line (34) for providing a raw mixture or
discharging the gas-phase reactor product directly into a product receiver tank (22) for providing a raw mixture.

7. The process of claim 6, wherein the first intermediate is subjected to a concentrator, preferably a hydrocyclone.

8. Use of a plant according to claim 1 for preparing propylene homopolymer or preferably propylene copolymers.

9. Use of a plant according to claim 1 for reducing comonomer / propylene molar ratio drift and/or hydrogen / propylene molar ratio drift over the length of at least one of said loop reactors.
